# EUROPÄISCHE PATENTSCHRIFT

(11) **EP 2 136 088 B1**
(45) Veröffentlichungstag und Bekanntmachung des Hinweises auf die Patenterteilung: **20.08.2014**
(21) Anmeldenummer: 09162495.7
(22) Anmeldetag: 11.06.2009
(51) Int. Cl.: F16B 37/14

(54) **Verbindungselement mit einer Schraube und einer daran unverlierbar angeordneten Hülse**
Connection element with a screw and an undetachable attached casing
Elément de liaison doté d'une vis et d'une douille agencée sur celle-ci de façon inamovible

(30) Priorität: 19.06.2008 DE 102008029236
(43) Veröffentlichungstag der Anmeldung: 23.12.2009
(73) Patentinhaber: KAMAX Holding GmbH & Co. KG, 35315 Homberg (Ohm) (DE)
(72) Erfinder: Hartmann, Dr. Gunther, 36304 Alsfeld (DE)
(74) Vertreter: REHBERG HÜPPE + PARTNER

(56) Entgegenhaltungen:
- DE-A1-102005 002 603
- US-A- 2 972 367

## Beschreibung

### TECHNISCHES GEBIET DER ERFINDUNG

Die Erfindung betrifft ein Verbindungselement mit einer Schraube und einer Hülse. Die Schraube weist einen Kopf, einen Schaftabschnitt und einen Gewindeabschnitt mit einem Gewinde auf. Der Schaftabschnitt ist dem Kopf zugekehrt und der Gewindeabschnitt von dem Kopf abgekehrt angeordnet. Der Schaftabschnitt besitzt einen Durchmesser, der kleiner als der Außendurchmesser des Gewindes des Gewindeabschnitts ist. Die Hülse besitzt eine erste Engstelle mit einem Durchmesser, der kleiner als der Außendurchmesser des Gewindes des Gewindeabschnitts ist.

Im Rahmen der vorliegenden Erfindung ist immer dann von einem "Verbindungselement" die Rede, wenn eine Schraube und eine Hülse zu einem Element verbunden sind. Ein solches Verbindungselement kann dann insbesondere zu mehreren in eine Transportstellung gelangen, in der es vom Schraubenhersteller z. B. an einen weiteren Hersteller geliefert wird, der insbesondere mehrere solche Verbindungselemente mit einem Bauteil - insbesondere einem Deckel, einer Haube oder dergleichen - zu einer vormontierten Baueinheit montiert. Die "vormontierte Baueinheit" besteht also aus einem Bauteil mit in der Regel mehreren daran montierten Verbindungselementen. Auch diese vormontierte Baueinheit gelangt dann wiederum in eine Transportstellung, z. B. zu einem Automobilhersteller, in dessen Montagelinie die vormontierte Baueinheit mit einem zugehörigen anderen Bauteil - insbesondere einem Unterteil - wie einem Zylinderblock, einem Getriebegehäuse oder dergleichen, verbunden wird. Bei dieser "Endmontage" werden die Schrauben der Verbindungselemente an der vormontierten Baueinheit insbesondere in Gewindelöcher im zugehörigen anderen Bauteil eingeschraubt.

### STAND DER TECHNIK

Ein Verbindungselement ist aus der DE 102 15 883 A1 bekannt. Das Verbindungselement weist eine Schraube und eine daran unverlierbar angeordnete Hülse auf. Die Hülse ist als Formkörper mit in Umfangsrichtung geschlossener zylindrischer Wandung ausgebildet und besitzt mindestens einen radial nach außen ragenden Flansch. Die Schraube besitzt einen Kopf und einen Schaft, auf dem dem Kopf abgekehrt ein Gewindeabschnitt und dem Kopf zugekehrt einen Schaftabschnitt mit einem gegenüber dem Außendurchmesser des Gewindeabschnitts reduzierten Durchmesser angeordnet sind. Die Hülse weist eine Engstelle mit kleinerem Durchmesser als der Außendurchmesser des Gewindeabschnitts auf, die mit dem dem Kopf zugekehrten Endbereich des Gewindeabschnitts zusammenarbeitet und eine Hinterschneidung bildet. Die Hinterschneidung bildet einen festen unnachgiebigen Anschlag.

Ein weiteres Verbindungselement ist aus der DE 199 24 502 A1 bzw. der EP 1 055 829 B1 bekannt. Das eine Element des Verbindungselements ist eine Schraube, die einen Kopf mit einer Kopfauflagefläche und einen Schaft aufweist. Der Schaft ist in einen zylindrischen Schaftabschnitt und einen mit Gewinde versehenen Gewindeabschnitt unterteilt, wobei der Schaftabschnitt kopfseitig, also dem Kopf bzw. der Auflagefläche des Kopfs der Schraube zugekehrt, angeordnet ist, während der Gewindeabschnitt mehr oder weniger am freien Ende des Schafts der Schraube angeordnet ist. Das andere Element des Verbindungselements ist eine Hülse. Die Hülse kann geschlitzt ausgebildet sein. Nach der Verbindung von Schraube und Hülse ist das Verbindungselement hergestellt. Die Schraube ist durch eine Engstelle an der Hülse unverlierbar und begrenzt axial verschiebbar gehalten. Die Engstelle weist einen kleineren Durchmesser auf, als es dem Außendurchmesser des Gewindeabschnitts entspricht. Der Schaftabschnitt besitzt einen vergleichsweise reduzierten Durchmesser, also einen Durchmesser, der kleiner als der Außendurchmesser des Gewindes ausgebildet ist.

Aus der US 5,489,177 ist ein Verbindungselement mit einer Schraube und einer daran unverlierbar angeordneten Hülse mit Flansch bekannt. Die Schraube und die Hülse werden jeweils fertig bearbeitet separat hergestellt und erst anschließend axial miteinander zusammengefügt, wobei sich die Hülse im Bereich ihrer Engstellen weitgehend elastisch aufweitet und nach dem Überschnappen einer Wulst an dem Schaft der Schraube wiederum einen vergleichsweise kleineren Durchmesser einnimmt. Voraussetzung für diese Anwendung ist also eine aufgerollte Wulst an der Übergangsstelle zwischen dem Gewinde der Spezialschraube und dem reduzierten zylindrischen Schaftabschnitt. Herkömmliche Schrauben mit Schaft und Gewindeabschnitt können nicht eingesetzt werden. Die Engstelle an der Hülse wird durch axiale Materialverschiebung an ausgewählten Umfangsstellen gebildet.

Die DE 10 2005 002 603 A1 zeigt ein Verbindungselement mit einer Schraube und einer daran unverlierbar angeordneten Hülse. Die Hülse ist als Formkörper mit in Umfangsrichtung geschlossener zylindrischer Wandung ausgebildet und besitzt mindestens einen radial nach außen ragenden Flansch. Die eingesetzte Spezialschraube weist neben einem Schaftabschnitt und einem Gewindeabschnitt zumindest eine radial vorspringende umlaufende Wulst auf, die im Bereich des Schaftabschnitts mit reduziertem Durchmesser angeordnet ist. Die Hülse besitzt in Zuordnung zu der Wulst zwei Engstellen, die axial beabstandet angeordnet sind und mit der Wulst zusammenarbeiten. Auf diese Weise sind die Schraube und die Hülse unverlierbar aneinander gehalten. Die eine Engstelle ist vor dem Aufschieben der Hülse auf die Spezialschraube axial ausgerichtet und nach dem Aufschieben radial verformbar. Die andere Engstelle ist federnd ausgebildet, so dass ein Aufschieben der zylindrischen Hülse über den Gewindeabschnitt möglich ist.

### AUFGABE DER ERFINDUNG

Der Erfindung liegt die Aufgabe zugrunde, ein Verbindungselement, ein Verfahren zu dessen Herstellung sowie eine vormontierte Baueinheit bereitzustellen, bei denen die Schraube und die Hülse stets unverlierbar miteinander verbunden sind und die Schraube in der unmontierten Stellung - abgesehen von der Unverlierbarkeit - axial frei relativ zu der Hülse beweglich, in der vormontierten Stellung der Hülse in einer Bohrung eines Bauteils jedoch relativ zu der Hülse axial definiert festsetzbar ist.

### LÖSUNG

Die Aufgabe der Erfindung wird erfindungsgemäß mit den Merkmalen der unabhängigen Patentansprüche 1, 10 bzw. 11 gelöst.

### BESCHREIBUNG DER ERFINDUNG

Die Erfindung betrifft ein Verbindungselement mit einer Schraube und einer Hülse, eine vormontierte Baueinheit mit einem solchen Verbindungselement und einem Bauteil mit einer Bohrung sowie ein Verfahren zur Herstellung des Verbindungselements. Die Schraube weist einen Kopf, einen Schaftabschnitt und einen Gewindeabschnitt mit einem Gewinde auf. Der Schaftabschnitt ist dem Kopf zugekehrt und der Gewindeabschnitt von dem Kopf abgekehrt angeordnet. Der Schaftabschnitt besitzt einen Durchmesser, der kleiner als der Außendurchmesser des Gewindes des Gewindeabschnitts ist. Die Hülse besitzt eine erste Engstelle mit einem Durchmesser, der kleiner als der Außendurchmesser des Gewindes des Gewindeabschnitts ist. Die Hülse weist weiterhin ein federndes Element mit einem Betätigungsbereich und einem Eingriffsbereich auf. In einer unmontierten Stellung des Verbindungselements steht der Betätigungsbereich derart aus der äußeren Umfangsfläche der Hülse heraus, dass der Eingriffsbereich nicht in das Gewinde des Gewindeabschnitts eingreift. In einer vormontierten Stellung des Verbindungselements in einer Bohrung eines Bauteils ist der Betätigungsbereich derart nach innen gedrückt, dass der Eingriffsbereich in das Gewinde des Gewindeabschnitts eingreift.

Es hat sich gezeigt, dass es in bestimmten Anwendungsfällen wünschenswert ist, die Schraube so in der Hülse definiert zu positionieren, dass die Schraube mit ihrem dem Kopf abgewandten freien Ende nicht aus der Hülse herausragt. Ein solcher Anwendungsfall liegt z. B. bei einer vormontierten Baueinheit vor, d. h. bei einem ersten Bauteil mit einer Bohrung, in die die Hülse eingepresst ist. Diese vormontierte Baueinheit soll im Rahmen der Endmontage insbesondere mit einer Mehrzahl von Verbindungselementen mit einem zweiten Bauteil verschraubt werden. Durch diese definierte Lage der Schraube relativ zu der Hülse und dem ersten Bauteil kann die vormontierte Baueinheit frei über dem zweiten Bauteil verschoben bzw. positioniert werden. Eine etwaige Beschädigung der Montagefläche des zweiten Bauteils wird zuverlässig vermieden.

Gleichzeitig hat sich aber herausgestellt, dass es gewünscht sein kann, dass die Schraube mit Ausnahme der Verliersicherung durch die erste Engstelle in der unmontierten Stellung des Verbindungselements - d. h. in einer Stellung, in der die Hülse nicht in eine Bohrung eines Bauteils eingepresst ist - frei relativ zu der Hülse in axialer Richtung verschieblich ist. Hierdurch kann die Hülse eine frei wählbare Position relativ zu der Schraube einnehmen, insbesondere eine Position, in der die Hülse mit ihrem entsprechenden Ende an der Kopfauflagefläche des Kopfs der Schraube anliegt. In dieser Stellung wird dann die Hülse in die entsprechende Bohrung des Bauteils eingepresst. Um die zuvor beschriebene andere Stellung zu erreichen, in der der Kopf der Schraube von der Hülse freikommt - oder anders gesagt das abgewandte freie Ende der Schraube in die Hülse eintritt - wird die Schraube relativ zu der Hülse und dem Bauteil weg gezogen bzw. die Schraube in die Hülse hineingedrückt.

In der vormontierten Stellung des Verbindungselements mit in eine Bohrung eines Bauteils eingepresster Hülse weist das erfindungsgemäße Verbindungselement hülsenseitig also zwei Engstellen auf, von denen die eine Engstelle vorzugsweise nicht-federnd und die andere Engstelle federnd-nachgiebig ausgebildet ist. Beide Engstellen arbeiten mit dem an der Schraube ohnehin vorhandenen Gewindeabschnitt zusammen und sind auf diesen in besonderer Weise abgestimmt. Die erste Engstelle bildet mit dem kopfseitigen Endbereich des Gewindeabschnitts eine Anschlagpaarung im Sinne eines Anschlags und eines Gegenanschlags, der die Unverlierbarkeit sichert, in dieser Richtung wirkt und durch normalerweise auftretende Kräfte nicht überwunden werden kann. Die zweite Engstelle ist federnd-nachgiebig ausgebildet, wobei die freien Enden der federnden Elemente über die Spitzen der Gewindegänge des Gewindeabschnitts hinübertreten bzw. -ratschen können. Dies gilt zumindest in der einen Richtung, wenn die Schraube aus der Hülse teilweise herausgezogen oder herausgedrückt wird. Das Heraustreten wird durch Anschlagen der Anschlagpaarung der ersten Engstelle beendet. Damit wird die begrenzte axiale Verschiebbarkeit im Stand der Technik beseitigt oder reduziert. In der anderen Richtung, also beim weiteren Hineinschieben der Schraube in die Hülse kann je nach Gestaltung der freien Enden der federnden Elemente eine solche Bewegung zugelassen oder verhindert werden. Wenn die freien Enden widerhakenartig ausgebildet sind, wird diese Bewegung verhindert, so dass bei der Endmontage die Schraube vorteilhaft nur in die Hülse hineindreht und nicht hineingedrückt werden kann.

Die beiden Engstellen dienen also zur Sicherung der Relativposition zwischen Schraube und Hülse in unterschiedliche Richtungen. Die erste Engstelle bildet einen Anschlag im Sinne einer Verliersicherung und verhindert ein Heraustreten der Schraube nach oben aus der Hülse heraus bzw. das Abfallen der Hülse über das dem Kopf abgewandte freie Ende der Schraube. Die erst im vormontierten Zustand der Hülse in einer Bohrung wirksam werdende zweite Engstelle dient hingegen der Erreichung und Beibehaltung einer definierten Position der Schraube relativ zu der Hülse - oder anders gesagt verhindert damit auch eine unerwünschte Relativbewegung der Schraube in die Hülse hinein. Die Schraube kann also in der maximal aus der Hülse herausgezogenen bzw. herausgedrückten Position selbsthemmend verbleiben. Diese Funktion des federnden Elements ist in der freien Stellung der Hülse noch nicht aktiviert, so dass in dieser Stellung Schraube und Hülse - abgesehen von der Verliersicherung - frei relativ zueinander positioniert werden können. Diese freie Positionierbarkeit ist insbesondere für den Vorgang des Einpressens der Hülse in eine Bohrung eines Bauteils bei der Vormontage gewünscht.

Die Hülse des Verbindungselements weist mindestens ein federndes Element, insbesondere ein radial federndes Element, auf. Es kann aber eine Mehrzahl federnder Elemente vorgesehen sein, insbesondere zwei, drei oder vier Elemente. Bevorzugt ist eine Ausführungsform mit zwei federnden Elementen. Diese sind zweckmäßigerweise gegenüberliegend am Umfang der Hülse angeordnet.

Die Ausbildung des federnden Elements im Sinne seines Verformungsverhaltens kann dabei unterschiedlich gewählt werden. Eine erste bevorzugte Möglichkeit besteht darin, das federnde Element so auszubilden, dass es beim Einpressen der Hülse in die Bohrung und der entsprechenden Kontaktierung des Betätigungsbereichs des federnden Elements durch die Bohrungswandung ausschließlich einer elastischen Verformung unterliegt. Denkbar ist jedoch auch eine elastisch-plastische Verformung.

Es kommen insbesondere normale Schrauben - im Gegensatz zu Spezialschrauben - zum Einsatz, die neben einem Kopf und einem Schaftabschnitt einen Gewindeabschnitt und in der Regel an dessen freien Ende auch einen Zentrierfortsatz aufweisen. Beide Engstellen der Hülse arbeiten mit Bereichen des Gewindeabschnitts zusammen, insbesondere mit solchen Gewindeabschnitten, die dem Kopf der Schraube zugekehrt angeordnet sind. So kann die erste Engstelle im Bereich des kopfseitigen Gewindeauslaufs des Gewindeabschnitts angreifen. Auch für die zweite Engstelle kann es vorteilhaft sein, mit einem Bereich des Gewindeabschnitts in Wirkkontakt zu treten, der kopfseitig angeordnet ist.

Die zweite Engstelle ist federnd-nachgiebig ausgebildet und besitzt zu diesem Zweck in der Regel mehrere radial federnde Elemente, deren freie Enden mehr oder weniger radial oder auch geneigt in das Außengewinde des Gewindeabschnitts insbesondere kraft- und/oder formschlüssig eingreifen. Dieser Eingriff kann insbesondere durch die Dimensionierung der Federkraft, mit der die federnden Elemente in die Gewindegänge des Gewindeabschnitts eingreifen, bestimmt werden. Weiterhin ist in diesem Zusammenhang die Formgebung der freien Enden der federnden Elemente bedeutsam. Diese können scharfkantig, beispielsweise komplementär zu der Formgebung der Gewindegänge des Gewindeabschnitts, aber auch abgerundet ausgebildet werden. Durch eine gerundete Formgebung wird erreicht, dass eine Beschädigung der Gewindegänge des Gewindeabschnitts bei Axialverschiebungen zwischen Schraube und Hülse möglichst gering gehalten werden. Eine scharfkantige Ausbildung der freien Enden der federnden Elemente in Verbindung mit einer großen Federkraft, also einer besonders steifen Ausbildung der federnden Elemente, kann dazu führen bzw. genutzt werden, dass die Schraube in der Endmontage durch eine reine Axialkraft nicht durch die Hülse weiterhin durchgeschoben werden kann, sondern beispielsweise nur durch eine Schraubbewegung an der Schraube aus der Hülse weiter austritt und in die Löcher des zugehörigen anderen Bauteils eintritt. Je nach der Dimensionierung und Abstimmung kann auch ein Mittelweg beschritten werden, bei dem eine begrenzte Axialkraft auf die Schraube in der Endmontage ausreicht, um die Schraube in das Gewindeloch des zugehörigen anderen Bauteils einzuführen, ohne dass der erste Gewindegang des Gewindelochs im anderen Bauteil durch die aufschlagende Schraube beschädigt würde. Die zweite Engstelle kann mit ihren federnden Elementen gleichsam rückwärtsgerichtete Widerhaken für das kopfseitige Gewindeende bilden. Die federnden Elemente können als elastische Zungen ausgebildet sein. Das federnde Element kann auch so ausgebildet sein, dass sein freies Ende verbreitert ist. Hierdurch wird die Stützwirkung des federnden Elements verbessert und die Relativposition der Hülse zur Schraube verlässlich gesichert.

Das neue Verbindungselement weist vorzugsweise an der Hülse axial auf einer Mantellinie oder geneigt durchgehend einen Schlitz oder Spalt auf. Unter einem "Schlitz" wird eine Unterbrechung des Materials der Hülse, in Umfangsrichtung gesehen, verstanden, bei der die beiden voneinander getrennten Enden eines Materialstreifens mehr oder weniger eng, also mit keinem oder keinem nennenswerten Abstand aneinander anliegen. Eine solche Ausbildung erlaubt nur ein Auffedern der Hülse radial nach außen. Unter einem "Spalt" wird eine Materialunterbrechung an der Hülse in der gleichen Richtung verstanden, bei der die beiden getrennten Materialenden einen nennenswerten Abstand voneinander aufweisen. In der Ausbildung mit einem Spalt kann die Hülse bei entsprechender Beanspruchung in radialer Richtung nach innen und nach außen zusammen- bzw. auffedern. Diese Eigenschaft kann bedeutsam sein, um Durchmessertoleranzen in den Bohrungen des zu montierenden Bauteils auszugleichen. Wenn es sich bei dem Bauteil um eine Haube handelt, ist zu beachten, dass solche Hauben insbesondere aus Kunststoff ausgebildet werden, so dass die Löcher neben toleranzmäßigen Durchmesserunterschieden auch noch Entformungsschrägen aufweisen können. All dies kann durch federnde Eigenschaften der Hülse aufgefangen bzw. ausgeglichen werden.

Gleichgültig, ob die Hülse am Verbindungselement letztendlich einen Schlitz oder einen Spalt aufweist, ist die Herstellung der Hülse für das Verbindungselement vergleichsweise einfach. Die Hülse kann als ebener Blechstreifen geformt, insbesondere gestanzt und geprägt werden, wobei dabei auch die Elemente der beiden Engstellen bereits mit eingeformt werden. Die Formgebung kann unter Verwendung von Gegenlagern in der ebenen Form eines Materialstreifens angebracht werden, so dass letztendlich die Engstellen mit vergleichsweise engen Toleranzen herstellbar sind. Anschließend wird der insoweit vorbereitete Materialstreifen bzw. Materialabschnitt gerollt, also in die Form einer Rohhülse verbracht. Diese Rohhülse kennzeichnet sich dadurch, dass die beiden einander zugekehrten Enden des Materialstreifens noch einen nennenswerten bzw. vergleichsweise größeren Abstand, eben einen größeren Spalt, aufweisen, als es die fertige Hülse an der Schraube und damit am Verbindungselement zeigt. Der insoweit vergrößerte Spalt ist so bemessen, dass sich eine Schraube in den Innenraum der Rohhülse einführen bzw. einschieben lässt, ohne dass die Spitzen der Gewindegänge des Gewindeabschnitts an der Innenwandung der Hülse und insbesondere an den bereits formmäßig fertig gestellten Engstellen anschlagen. Das Einschieben der Schraube in die Rohhülse kann insbesondere so erfolgen, dass die Engstellen der Hülse nicht dem Gewindeabschnitt, sondern dem Schaftabschnitt der Schraube gegenüberliegen. Durch eine nachfolgende Quetschbeanspruchung der Hülse werden die Durchmesser der Hülse verringert, wobei auch die beiden späteren Engstellen jeweils auf kleineren Durchmessern zu liegen kommen. All dies kann geschehen, ohne dass die Engstellen am Schaftabschnitt anschlagen. Bei dieser Quetschverformung wird der vergrößerte Spalt entweder in einen Spalt oder einen Schlitz an der Hülse verformt.

Während die erste Engstelle bereits jetzt wirksam ist, gilt dies für die zweite Engstelle erst dann, wenn diese in die vormontierte Stellung an dem Bauteil gebracht wurde - d. h. nachdem die Hülse in die Bohrung eingepresst und der Betätigungsbereich der federnden Elemente dadurch derart im Wesentlichen radial nach innen gedrückt wurde, dass der Eingriffsbereich in das Gewinde des Gewindeabschnitts eingreift. Hierdurch ist die begrenzte axiale Verschiebbarkeit zwischen Schraube und Hülse in dieser Stellung der beiden Teile des Verbindungselements zueinander entweder erheblich reduziert oder sogar gänzlich beseitigt. Bei der Montage des vorzumontierenden Bauteils und bei der Handhabung dieses Bauteils während der Endmontage am anderen zugehörigen Bauteil können auftretende Stöße, Schwingungen und Kräfte nicht dazu führen, dass die Schrauben nach unten aus den Hülsen heraustreten oder sich gar nach oben lösen. Die Schraube kann durch die beiden Engstellen und die dabei einwirkenden Reibungskräfte auch gegen ein Verdrehen gehalten sein, welche jedoch während des Einschraubvorgangs der Schrauben in das andere zugehörige Bauteil überwunden werden können. Je nach der eingangs beschriebenen Gestaltung und Dimensionierung der Federkraft der federnden Elemente und der formenmäßigen Gestaltung der freien Enden der federnden Elemente, die in das Außengewinde des Gewindeabschnitts eingreifen, lässt sich eine Schraube eines Verbindungselements bei der Endmontage entweder gezielt durch eine entsprechend bemessene Axialkraft relativ zur Hülse in diese hinein und in den Eingang des Gewindeloches im anderen zugehörigen Bauteil einführen, ohne dass dessen erster Gewindegang beschädigt oder verquetscht würde. Es ist aber auch möglich, die federnden Elemente relativ steif und die freien Enden der federnden Elemente relativ scharfkantig, insbesondere in der Form als Widerhaken, auszubilden, um eine Hineinschiebemöglichkeit der Schraube durch eine rein axiale Kraftbeaufschlagung während der Endmontage zu verhindern und das axiale Heraustreten der Schraube aus der Hülse und das Eintreten in das Gewindeloch im zugehörigen anderen Bauteil ausschließlich durch einen Schraubvorgang an der Schraube, also einen Drehvorgang, zuzulassen. Durch diese Drehbewegung wird die Schraube mit ihrem Gewindeabschnitt aus den federnden Elementen der zweiten Engstelle herausgeschraubt.

Wenn die Hülse eine größere axiale Länge als der Gewindeabschnitt der Schraube aufweist, ergibt sich die Möglichkeit, dass die Hülse den Gewindeabschnitt vollständig schützend abdeckt. Dabei ist es in der Regel nicht hinderlich, ob die Schraube noch einen Zentrierzapfen aufweist oder nicht. In diesem Zusammenhang kann auch die Ausbildung der Montagefläche an dem zugehörigen anderen Bauteil oder die Anordnung einer Dichtung, Unterlegscheibe oder dergleichen Berücksichtigung finden. Das Verbindungselement am vormontierten Bauteil soll dessen Positionierung relativ zum anderen zugehörigen Bauteil jedenfalls nicht behindern.

Die die zweite Engstelle bildenden federnden Elemente können axial nahe zu der ersten Engstelle angeordnet sein, so dass beide Engstellen mit dem kopfseitigen Endbereich des Gewindeabschnitts zusammenarbeiten. Besonders vorteilhaft ist es, wenn die erste Engstelle mit dem kopfseitigen Gewindeauslauf des Gewindeabschnitts zusammenarbeitet und die zweite Engstelle mit einem der ersten Gewindegänge nahe dem kopfseitigen Gewindeauslauf zusammenarbeitet, so dass der größte Teil des Gewindeabschnitts mit den beiden Engstellen zu keiner Zeit in Kontakt kommt, also eine Beschädigung des Gewindes ausgeschlossen ist. Die die erste und die zweite Engstelle bildenden Elemente können auf dem Umfang der Hülse einander axial ganz oder teilweise überdeckend abwechselnd angeordnet sein, um die beiden Engstellen axial möglichst nahe aneinanderzurücken.

Wenn zumindest die freien Enden der federnden Elemente der zweiten Engstelle an der Hülse axial entsprechend der Steigung des Gewindes des Gewindeabschnitts verteilt angeordnet sind, besteht die Wahrscheinlichkeit, dass die freien Enden der federnden Elemente der zweiten Engstelle zu mehreren in einen Gewindegang des Gewindeabschnitts eintreten, so dass die verbleibende Relativbeweglichkeit der Schraube relativ zur Hülse auf einen Weg beschränkt ist, der jedenfalls kleiner als die Höhe eines Gewindegangs ist. Durch eine geringfügige Verdrehbewegung im Anschluss an das axiale Verschieben der Schraube relativ zur Hülse kann sogar eine feste Position der Schraube an der Hülse bei dem montierten Verbindungselement erzielt werden, also die axiale begrenzte Beweglichkeit der Schraube relativ zur Hülse am Verbindungselement völlig beseitigt werden.

Für die gestalterische Festlegung der Ausbildung der freien Enden der federnden Elemente der zweiten Engstelle gibt es verschiedene Möglichkeiten. Diese freien Enden können entweder scharfkantig, widerhakenartig oder andererseits aber auch mehr oder weniger abgerundet ausgebildet werden, je nach dem, welcher besondere Zweck damit erreicht werden soll. Für das besondere Zusammenwirken der zwei Engstellen zueinander und der Fixierung der Schraube relativ zur Hülse ist eine scharfkantige Ausbildung zu bevorzugen, wobei eine geringfügige etwaige Beschädigung der kopfseitigen Gewindegänge des Gewindeabschnitts in Kauf zu nehmen ist. Wenn eine solche etwaige Beschädigung weiter reduziert oder gänzlich beseitigt werden soll, müssen die freien Enden abgerundet und die formschlüssige Verbindung mehr durch eine kraftschlüssige Verbindung ersetzt werden.

Das mindestens eine federnde Element kann an einer Seite mit der Hülse verbunden und an seinen drei anderen Seiten unter Bildung eines Freiraums frei von der Hülse sein. Durch diesen Freiraum ergibt sich eine vereinfachte Fertigung der Hülse und eine verbesserte Elastizität des federnden Elements. Der Freiraum kann insbesondere durch Freischneiden erzeugt werden. Das federnde Element kann insbesondere durch Stanzen, Pressen oder Prägen hergestellt werden. Das federnde Element kann im Vergleich zu der Hülse eine geringere Materialstärke besitzen. Diese geringere Materialstärke im Vergleich zum Ausgangsmaterial der Hülse wird durch Pressen erzeugt. Die im Rahmen der Kaltverfestigung resultierende erhöhte Elastizität wird dann vorteilhaft für die Gewährleistung einer sicheren Haltefunktion des federnden Elements genutzt.

Auch für die Ausbildung der ersten Engstelle ergeben sich verschiedene Realisierungsmöglichkeiten. Einige davon sind in den Zeichnungen dargestellt. Aber auch andere Realisierungsmöglichkeiten im Einzelnen können durchaus sinnvoll sein.

Die Elemente der ersten und/oder der zweiten Engstelle können so ausgebildet sein, dass sie zugleich ein von außen erkennbares Merkmal der Hülse darstellen, welches eine automatische Erkennung der Orientierung der Hülse relativ zur Schraube bei der Verbindung zwischen Schraube und Hülse, also bei der Herstellung des Verbindungselements, erbringt. Insbesondere bei einem automatisch durchgeführten Quetschvorgang müssen die Hülsen in zuverlässiger Orientierung den Schrauben zugeführt bzw. beide Teile ineinandergeschoben werden. Es ist aber alternativ oder zusätzlich auch möglich, ein oder mehrere Durchmesser verändernde Merkmale, wie z. B. Einprägungen oder auch Sicken oder Fasen, die sich über den gesamten Umfang oder zumindest wesentliche Teile des Umfangs der Hülse erstrecken, anzubringen, um diese automatische Erkennung der Orientierung der Relativlage der Hülsen zu verbessern.

Die federnden Elemente der zweiten Engstelle an der Hülse können relativ zu der ersten Engstelle der Hülse, der axialen Längen des Gewindeabschnitts und der Hülse und den übrigen relevanten Dimensionen des vormontierten Bauteils und des zugehörigen anderen Bauteils so positioniert sein, dass bei der Endmontage der erste Gewindegang des Gewindeabschnitts erst dann in ein Gewindeloch im anderen zugehörigen Bauteil eingreifen kann, wenn der Gewindeabschnitt zuvor von der zweiten Engstelle freigekommen ist. Dies erlaubt ein leichtes Eintreten des Gewindeabschnitts in das Gewindeloch im anderen zugehörigen Bauteil, wobei dabei auch Herstellungstoleranzen ausgeglichen werden können. Es ist aber auch in manchen Fällen nicht kritisch, wenn diese relativen Dimensionen nicht eingehalten werden und der erste Gewindegang des Gewindeabschnitts bereits dann in das Gewindeloch im anderen zugehörigen Bauteil eintritt, wenn der Gewindeabschnitt noch Kontakt zu der zweiten Engstelle hat. Da die zweite Engstelle ohnehin federnd ausgebildet ist, können auch dabei Toleranzen überbrückt und die Endmontage sicher zu Ende gebracht werden.

Schließlich bezieht sich die Erfindung auch noch auf ein Verfahren zur Herstellung eines Verbindungselements mit einer Schraube und einer daran unverlierbar angeordneten Hülse, wie dieses in Anspruch 9 beschrieben ist. Damit wird eine besonders preisgünstige Herstellungsmöglichkeit für die Hülse und damit für das Verbindungselement aufgezeigt. Als Schraube kann eine Schraube üblicher Ausbildung eingesetzt werden, die lediglich einen Schaftabschnitt und einen Gewindeabschnitt aufweisen muss. Irgendwelche gesonderten umlaufenden Wulste, wie sie für Spezialschrauben typisch sind, sind nicht erforderlich, da beide Engstellen mit dem ohnehin vorhandenen Gewindeabschnitt zusammenarbeiten. Die Elemente der beiden Engstellen werden vorteilhaft an einem ebenen Materialstreifen ausgeformt, also an dem Materialstreifen, aus welchem dann nachfolgend die Rohhülse gerollt wird. Dabei kann man am ebenen Materialstreifen vorteilhaft mit Gegenlagern zusammenarbeiten, so dass die Dimensionen der Elemente der beiden Engstellen besonders einfach und toleranzmäßig eng beherrschbar sind. Dies wirkt sich auch in Richtung auf enge Toleranzen an der Hülse aus, so dass hier keine besonderen Maßnahmen zur Qualitätssteigerung erforderlich sind. Es versteht sich, dass auch der Quetschvorgang zu beherrschen bzw. mit der erforderlichen Präzision durchzuführen ist, damit der reduzierte Durchmesser an der ersten Engstellen der Hülse dann entsteht, wenn Schraube und Hülse miteinander unverlierbar verbunden werden, und der reduzierte Durchmesser an der zweiten Engstellen der Hülse dann entsteht, wenn die Hülse in eine Bohrung eingepresst wird.

Ein solcher Quetschvorgang wird vorteilhaft in einer solchen Relativlage zwischen Schraube und Rohhülse durchgeführt, bei der die beiden Engstellen des Schaftabschnitts der Schraube gegenüberliegen. Der Quetschvorgang wird also nicht von den Unsicherheiten eines Kontakts mit dem Gewindeabschnitt der Schraube belastet. Vielmehr wird die Schraube nach Durchführung des Quetschvorgangs in der beschriebenen Relativlage aus der Hülse so weit herausgedrückt, bis ein Anschlagen der ersten Engstelle am Gewindeabschnitt erfolgt.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erste Ausführungsform des neuen Verbindungselements.
- **Fig. 2**: zeigt die erste Ausführungsform des neuen Verbindungselements in perspektivischer Darstellung.
- **Fig. 3**: zeigt eine zweite Ausführungsform des neuen Verbindungselements.
- **Fig. 4**: zeigt die erste Ausführungsform des neuen Verbindungselements mit maximal in die Hülse eingeschobener Schraube.
- **Fig. 5**: zeigt die erste Ausführungsform des neuen Verbindungselements in einer ersten Stellung während der Vormontage an einem Bauteil.
- **Fig. 6**: zeigt die erste Ausführungsform des neuen Verbindungselements in einer zweiten Stellung während der Vormontage an einem Bauteil.
- **Fig. 7**: zeigt die erste Ausführungsform des neuen Verbindungselements in einer dritten Stellung während der Vormontage an einem Bauteil.
- **Fig. 8**: zeigt die erste Ausführungsform des neuen Verbindungselements in einer vierten Stellung während der Vormontage an einem Bauteil.
- **Fig. 9**: zeigt die erste Ausführungsform des neuen Verbindungselements während der Endmontage.
- **Fig. 10**: zeigt die zweite Ausführungsform des neuen Verbindungselements während der Endmontage.
- **Fig. 11**: zeigt eine dritte Ausführungsform des neuen Verbindungselements.
- **Fig. 12**: zeigt eine vierte Ausführungsform des neuen Verbindungselements.
- **Fig. 13**: zeigt eine fünfte Ausführungsform des neuen Verbindungselements.
- **Fig. 14**: zeigt eine sechste Ausführungsform des neuen Verbindungselements.

### FIGURENBESCHREIBUNG

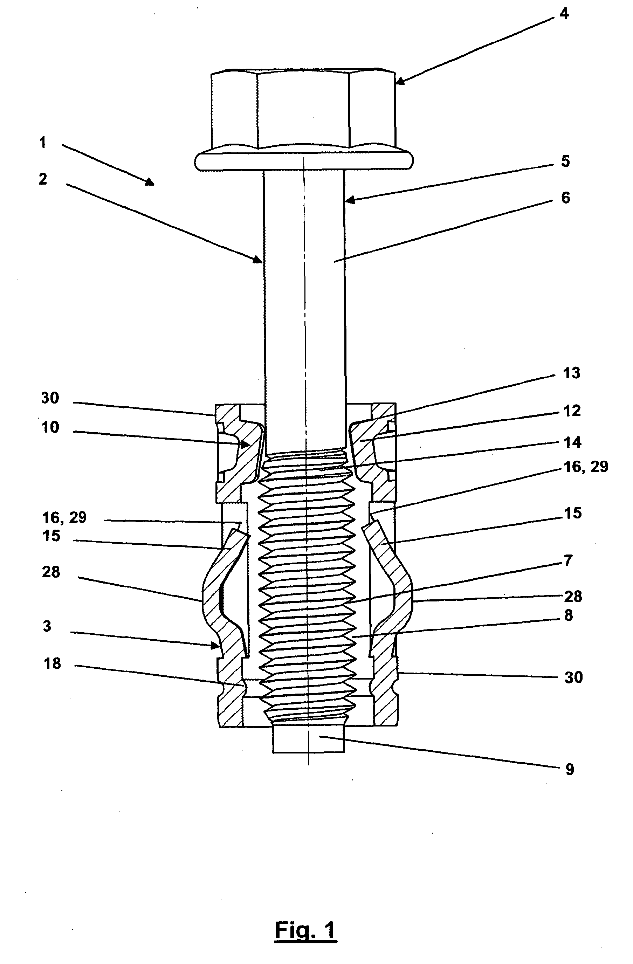

**Fig. 1** zeigt eine erste beispielhafte Ausführungsform eines neuen Verbindungselement 1, welches eine Schraube 2 und eine Hülse 3 aufweist. Die Schraube 2 weist einen Kopf 4 und einen Schaft 5 auf. Die Schraube 2 ist herkömmlich ausgebildet. Der Kopf 4 weist eine Schlüsselangriffsfläche und eine Kopfauflagefläche auf. Der Schaft 5 setzt sich aus einem zylindrischen Schaftabschnitt 6 und einem Gewindeabschnitt 7 zusammen, wobei der Außendurchmesser des Schaftabschnitts 6 geringer ausgebildet ist als der Außendurchmesser des Gewindeabschnitts 7 mit seinem Gewinde 8, hier einem metrischen Gewinde. Der Schaft 5 kann in einem Zentrieransatz 9 enden. Es ist erkennbar, dass der Schaftabschnitt 6 dem Kopf 4 zugekehrt an der Schraube 2 angeordnet ist, während der Gewindeabschnitt 7 dem Kopf 4 abgekehrt angeordnet ist.

Die Hülse 3 ist im Wesentlichen kreisringförmig ausgebildet. Sie ist vorzugsweise aus einem ebenen Blechabschnitt geformt, aus dem dann die Hülse 3 durch Rollen geformt wird. Genauer gesagt entsteht nach dem Rollen des Blechstreifens eine Rohhülse mit einem Innendurchmesser, der noch größer ist als der Außendurchmesser des Gewindes 8, so dass bei der Herstellung des Verbindungselements 1 die Schraube 2 in die Hülse 3 eingeführt werden kann. Anschließend erfolgt ein Quetschvorgang in radialer Richtung, unter dem sich der Innendurchmesser der Hülse 3 verkleinert. Dies kann im Bereich des Schaftabschnitts 6 geschehen, ist aber auch in der Relativlage möglich, die Fig. 1 zeigt. Auf beiden Wegen entsteht ein Verbindungselement 1, bei dem Schraube 2 und Hülse 3 unverlierbar miteinander verbunden sind.

Die Hülse 3 ist in besonderer Weise ausgebildet. Die Hülse 3 weist eine erste Engstelle 10 auf. Die erste Engstelle 10 weist mehrere über den Umfang der Hülse 3 verteilt angeordnete Einprägungen 12 auf, die radial nach innen vorstehende Vorsprünge bilden. Es können beispielsweise eine, zwei, drei oder vier Einprägungen 12 auf dem Umfang gleichmäßig verteilt vorgesehen sein. Im vorliegenden bevorzugten Beispiel sind vier Einprägungen 12 vorhanden. Die Einprägungen 12 können auf ihrer nach innen vorspringenden Seite Flächenelemente 13 bilden, die sich zu einer kegelförmigen Umhüllung des kopfseitigen Gewindeauslaufs 14 des Gewindeabschnitts 7 ergänzen, wie dies in der DE 102 15 883 A1 im Einzelnen beschrieben ist. Die Einprägungen 12 arbeiten als feste Anschlagspaarung mit dem Gewindeauslauf 14 zusammen, also jedenfalls dem Gewindeabschnitt 7, der ohnehin an der Schraube 2 vorgesehen ist. Die Dimensionierung ist so getroffen, dass in der fertig montierten Stellung des Verbindungselements 1 gemäß Fig. 1 die Schraube 2 durch normalerweise auftretende Kräfte nicht weiter aus der Hülse 3 herausgezogen oder herausgedrückt werden kann. Die erste Engstelle 10 bildet damit einen festen, unüberwindlichen Anschlag.

Weiterhin sind zwei federnd-nachgiebig ausgebildete Elemente 15 vorgesehen, die ebenfalls über den Umfang der Hülse 3 verteilt angeordnet sind. Es können aber auch mehr oder weniger federnde Elemente 15 vorhanden sein. Diese federnden Elemente 15 bilden später die zweite Engstelle 11, wie dies weiter unterhalb beschrieben wird. Die federnden Elemente 15 können zungenartig aus dem Material der Hülse 3 angeschnitten bzw. ausgeformt sein. Ihre freien Enden 16 sind hier scharfkantig bzw. widerhakenartig ausgebildet. Die federnden Elemente 15 weisen jeweils einen Betätigungsbereich 28 und einen Eingriffsbereich 29 auf, wobei in einer gezeigten unmontierten Stellung des Verbindungselements 1 der Betätigungsbereich 28 derart radial aus der äußeren Umfangsfläche 30 der Hülse 3 heraussteht, dass der Eingriffsbereich 29 nicht in das Gewinde 8 des Gewindeabschnitts 7 eingreift. Die federnden Elemente 15 sind also noch nicht aktiv und bilden noch keine zweite Engstelle 11.

Es versteht sich, dass die Ausbildung der Elemente für die erste Engstelle 10 und für die zweite Engstelle 11 vorteilhaft durch Stanz- bzw. Drückvorgänge am noch ebenen Blechstreifen realisiert werden können, also in einer Stellung, in der mit Gegenlagern gearbeitet werden kann, so dass die Anordnung und Dimensionierung der Elemente für die erste und zweite Engstelle 10, 11 in engen Toleranzen einhaltbar ist. Das Wickeln der Rohhülse aus dem ebenen Blechstreifen geschieht dann so, dass zwischen den einander zugekehrten Enden des Blechstreifens ein Spalt entsteht und die inneren Enden der Einprägungen 12 und der federnden Elemente 15 auf Durchmessern liegen, die größer als der Außendurchmesser des Gewindes 8 des Gewindeabschnitts 7 bemessen sind. In dieser Stellung werden also Schraube 2 und Hülse 3 ineinandergeschoben und einem Quetschvorgang ausgesetzt, wobei der Spalt an der Hülse 3 zu einem Schlitz 17 zusammengedrückt werden kann. Dabei werden die Einprägungen 12 auf einen Durchmesser gebracht, der den Außendurchmesser des Gewindes 8 des Gewindeabschnitts 7 unterschreitet, während der Durchmesser der federnden Elemente 15 größer ist. Wenn der Quetschvorgang unter Relativlage der Rohhülse gegenüber dem Schaftabschnitt 6 geschieht, ist es anschließend möglich, die Schraube 2 aus der Hülse 3 teilweise herauszudrücken, bis die Einprägungen 12 der ersten Engstelle an dem Gewindeauslauf 14 zur Anlage kommen. In dieser Stellung, die in Fig. 1 gezeigt ist, können die Verbindungselemente in eine Transportstellung gelangen. Es ist erkennbar, dass die Engstelle 10 relativ weit oben, also am kopfseitigen Ende der Hülse 3, angeordnet ist, damit die Hülse 3 den gesamten Gewindeabschnitt 7 schützend umgibt.

Die Hülse 3 kann hinsichtlich der Ausbildung der ersten Engstelle 10 und/oder der zweiten Engstelle 11 so getroffen sein, dass die Formgebung dieser Elemente 10, 11 zugleich ein Merkmal der Hülse 3 darstellt, welches eine automatische Erkennung der Orientierung der Hülse 3 in einer automatisch arbeitenden Montagemaschine zur unverlierbaren Verbindung zwischen Schraube 2 und Hülse 3 ermöglicht. Andererseits ist es auch möglich, die Hülse 3 mit einer insbesondere nach innen vorspringenden Wulst 18 auszustatten, so dass dieses Merkmal zur automatischen Erkennung der Orientierung der Hülse herangezogen werden kann. Es versteht sich, dass der Innendurchmesser der Wulst 18 immer noch erheblich größer als der Außendurchmesser des Gewindes 8 gestaltet ist, so dass die Wulst 18 das ordnungsgemäße Zusammenarbeiten der Engstellen 10 und 11 nicht beeinträchtigt.

Die Länge der Hülse 3 kann größer als die Länge des Gewindeabschnitts 7 ausgebildet sein. Fig. 1 lässt erkennen, dass ein Teil des Zentrieransatzes 9 aus der Hülse 3 herausragt. Die Längenausbildung kann aber auch so getroffen sein, dass dies gerade nicht der Fall ist.

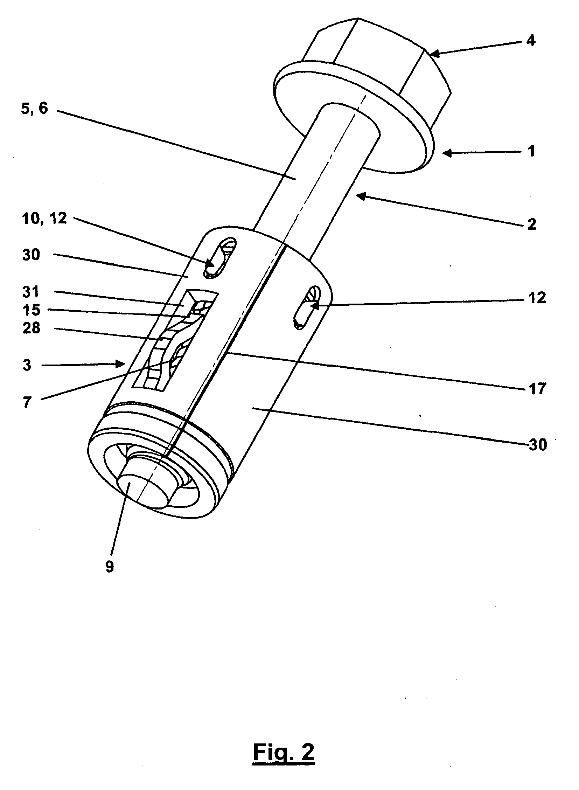

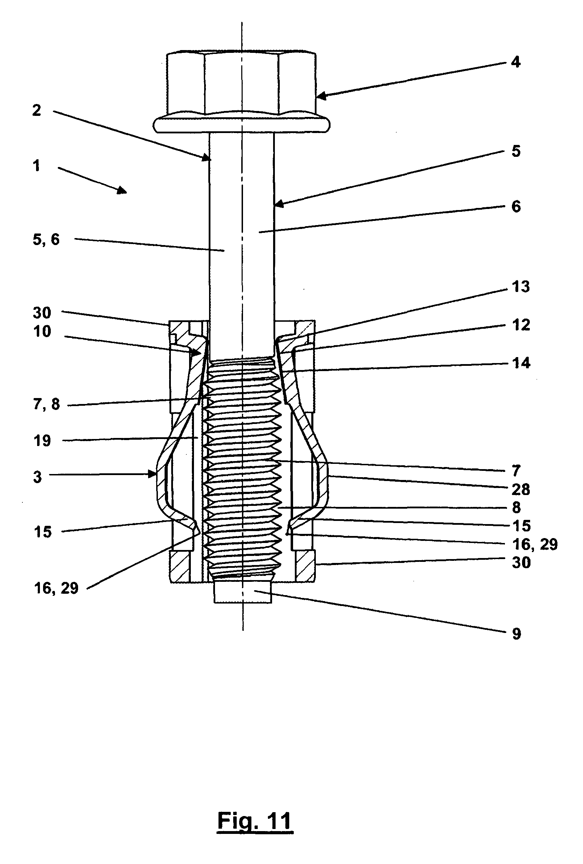

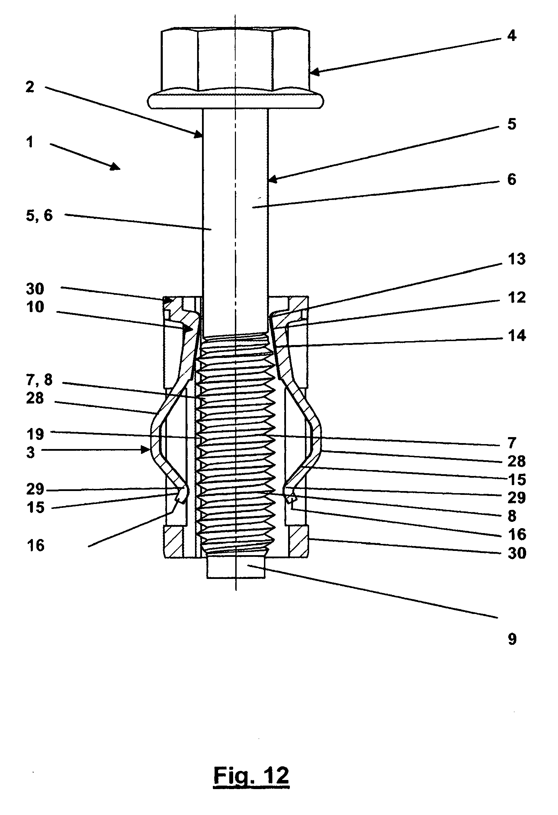

**Fig. 2** zeigt die erste Ausführungsform des neuen Verbindungselements 1 in perspektivischer Darstellung. Es ist insbesondere erkennbar, dass vier erste Engstellen 10 und zwei (spätere) zweite Engstellen 11 bzw. Elemente 15 vorhanden sind, wobei die Elemente 15 jeweils axial unterhalb einer erste Engstelle 10 angeordnet sind. Ein das Element 15 an drei Seiten umgebender Freiraum 31 ist gut erkennbar. Die Hülse 3 weist einen Schlitz 17 auf, an dessen Stelle jedoch auch ein Spalt 19 (Fig. 11, 12) vorhanden sein könnte.

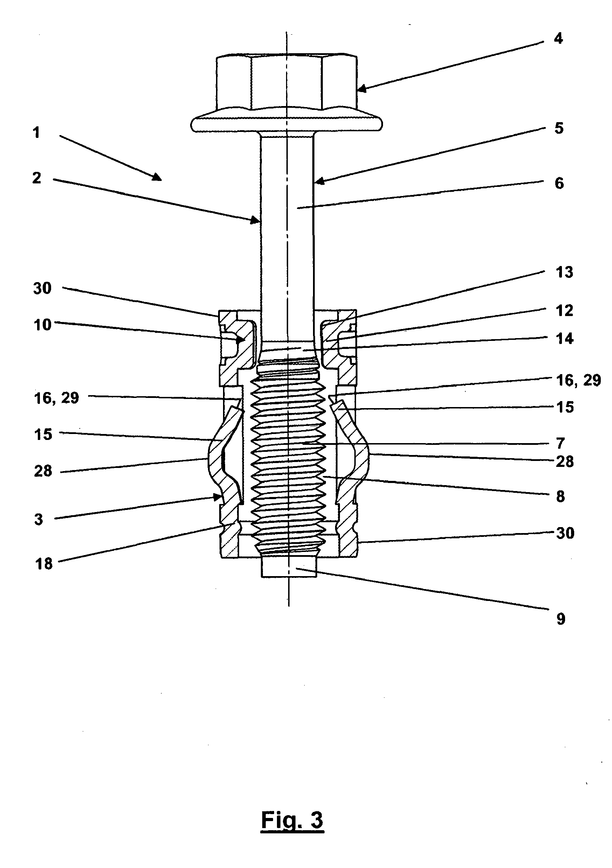

**Fig. 3** zeigt eine zweite Ausführungsform des neuen Verbindungselements 1, das auf der ersten Ausführungsform gemäß Fig. 1 aufbaut. Abweichend dazu ist der wesentliche Durchmesser des Schaftabschnitts 6 vergleichsweise geringer ausgebildet, d. h. der Schaftabschnitt 6 ist eingezogen geformt. Die Reduzierung des Durchmessers des Schaftabschnitts 6 erbringt vorteilhaft ein erhöhtes Radialspiel, welches beim Einschrauben der Schrauben 2 in der Endmontage genutzt werden kann. Auf die Ausbildung der Engstelle 10 ist etwas abgeändert. Die Flächenelemente 13 der Einprägungen 12 verlaufen unter einem wesentlichen kleineren Hüllwinkel oder sind sogar axial ausgerichtet ausgebildet. In Abstimmung hierzu ist der Gewindeauslauf 14 oder ein Teil desselben durch einen Rollvorgang im Durchmesser verringert, so dass ein sprunghafter Übergang zu dem übrigen Gewinde 8 des Gewindeabschnitts 7 entsteht. Auch damit wird eine Anschlagpaarung an der Engstelle 10 geschaffen, die durch normalerweise auftretende Kräfte nicht überwunden werden kann.

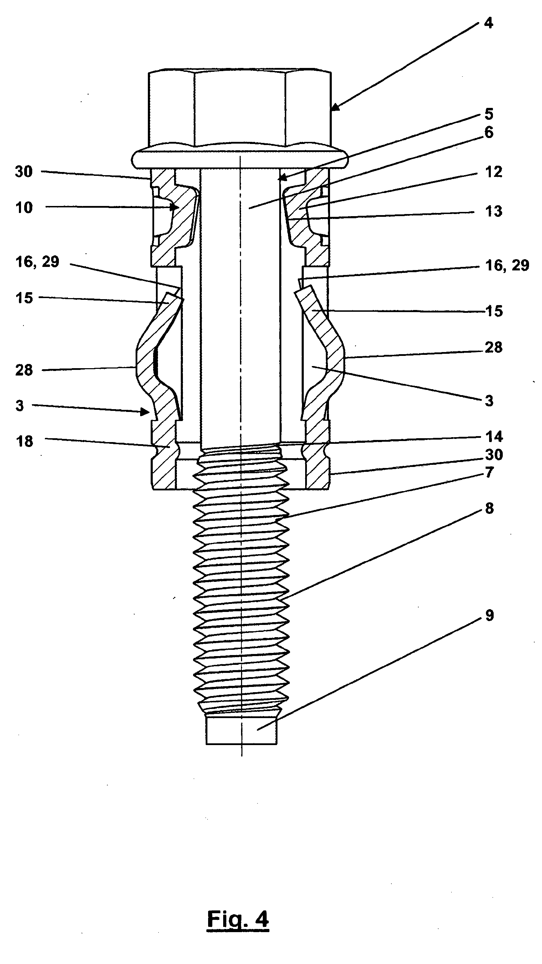

**Fig. 4** zeigt die erste Ausführungsform des neuen Verbindungselements 1 mit maximal in die Hülse 3 eingeschobener Schraube 2. In dieser Position wird das Verbindungselement 1 vor der Vormontage bevorzugt gehandhabt. Abgesehen von der Verliersicherung ist die Hülse 3 frei relativ zur Schraube 2 positionierbar.

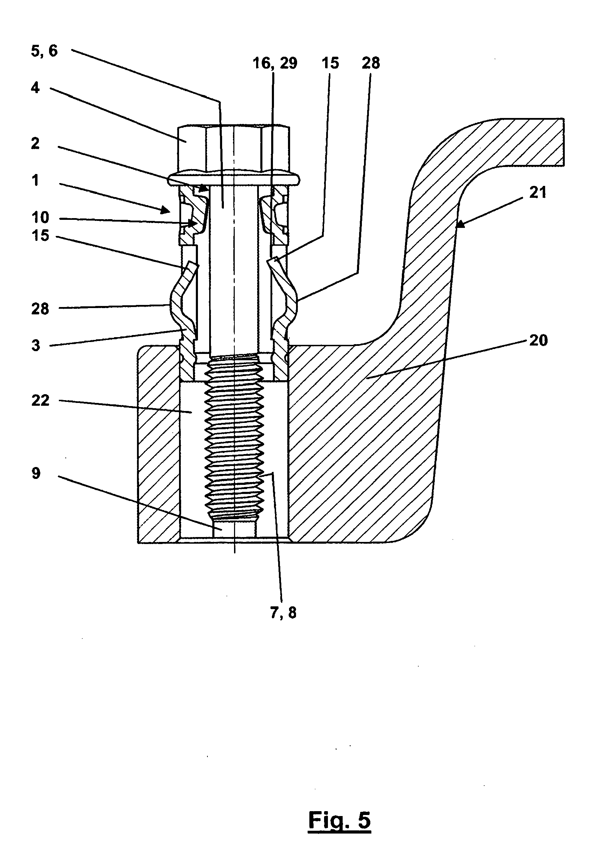

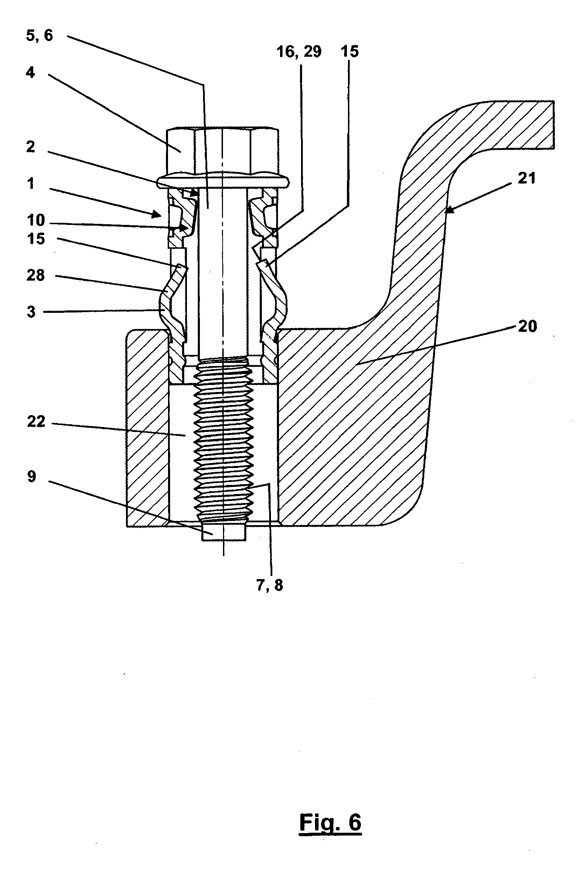

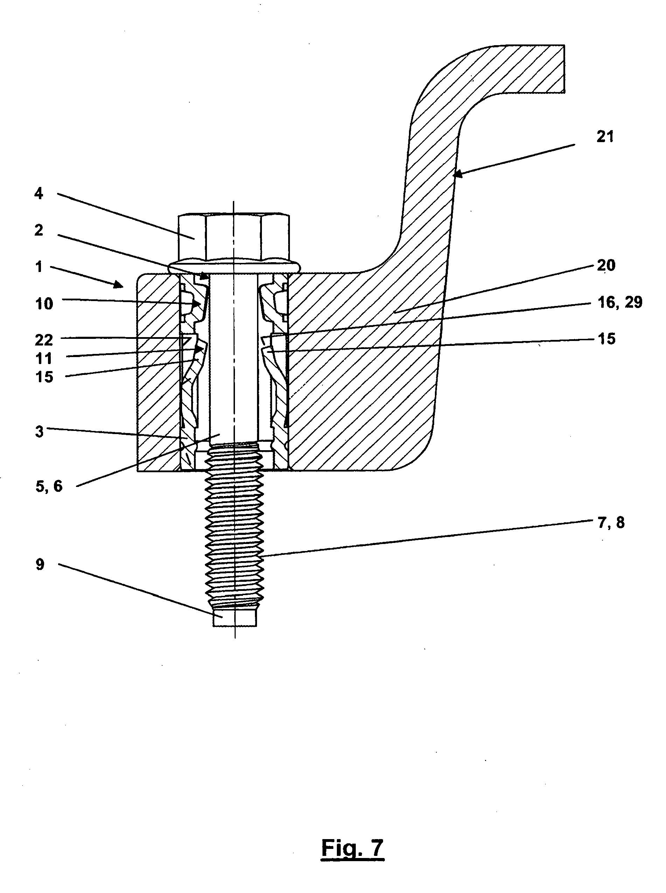

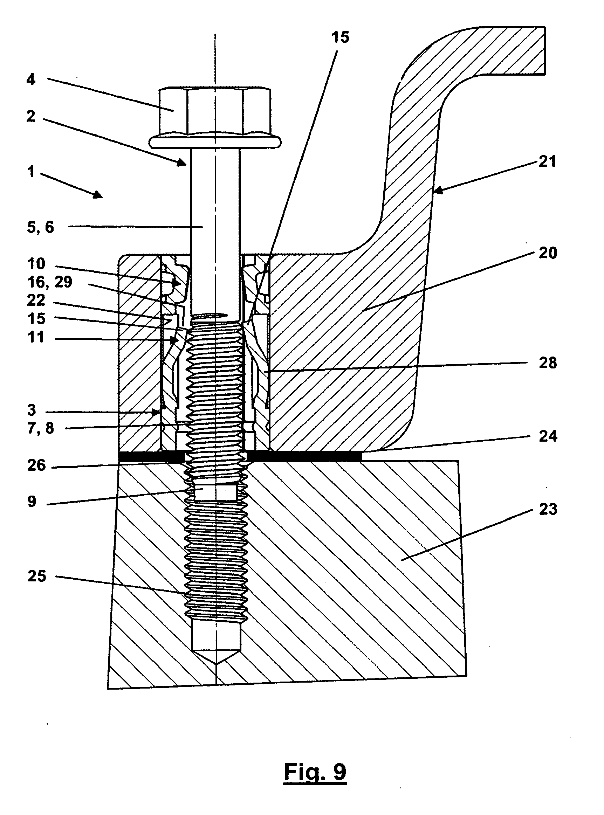

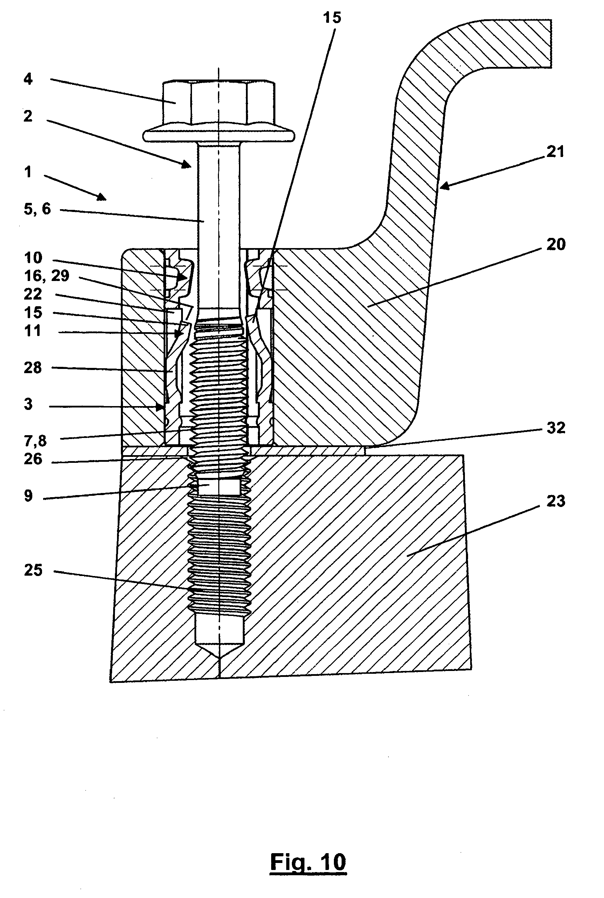

**Fig. 5-8** zeigen nun die erste Ausführungsform des neuen Verbindungselements 1 in mehreren aufeinander folgenden Stellungen während der Vormontage an einem Bauteil 20. Das Bauteil 20 wird zwecks Herstellung einer vormontierten Baueinheit 21 mit mehreren Verbindungselementen 1 versehen, von denen aus Gründen der Übersichtlichkeit nur eins dargestellt ist. Hierzu werden jeweils die Hülsen 3 der Verbindungselemente 1 mit den darin unverlierbar gehaltenen Schrauben 2 in Bohrungen 22 eingepresst, wobei sinnvoll das Federungsvermögen der Hülse 3 zur Überbrückung von Toleranzen ausgenutzt werden kann. Dies gilt insbesondere dann, wenn das Bauteil 20 aus Kunststoff besteht und die Bohrungen 22 Entformungsschrägen aufweisen. Vom Hersteller der vormontierten Baueinheit 21 gelangen diese dann z. B. zum Automobilbauer, bei dem die vormontierte Baueinheit 21 mit einem zweiten Bauteil 23 (Fig. 9, 10), beispielsweise einem Unterteil, verbunden wird.

Bei der in Fig. 5-8 gezeigten Vormontage des Verbindungselements 1 treten nun die federnden Elemente 15 in Aktion. Beim fortgesetzten Einpressen der Hülse 3 in die Bohrung 22 kommen die aus der äußeren Umfangsfläche 30 hervorstehenden Betätigungsbereiche 28 der federnden Elemente 15 mit der inneren Oberfläche der Bohrung 22 bzw. dem Material des Bauteils 20 oder einem anderen Teil derart in Kontakt, dass der Betätigungsbereich 28 und dementsprechend auch der damit verbundene Eingriffsbereich 29 radial nach innen gedrückt wird. Hierdurch erreichen die freien Enden 16 der federnden Elemente 15 erstmals einen gegenüber dem Außendurchmesser des Gewindes 8 des Gewindeabschnitts 7 verringerten Durchmesser, so dass sie nun die zweite Engstelle 11 bilden.

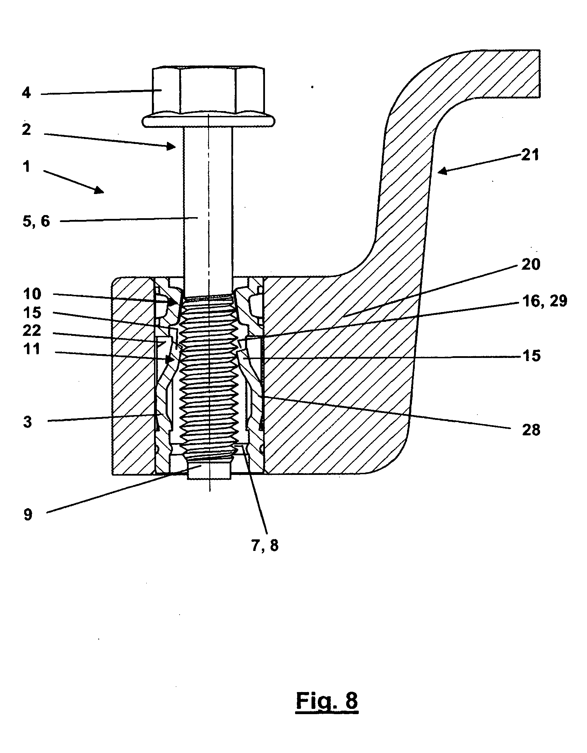

Wie **Fig. 8** zeigt, kann nunmehr die Schraube 2 nach oben aus der Hülse 3 herausgezogen bzw. gedrückt werden, wodurch die federnden Elemente 15 kraft- und/oder formschlüssig in das Gewinde 8 des Gewindeabschnitts 7 eingreifen. Auch die federnden Elemente 15 arbeiten somit nun mit dem Gewindeabschnitt 7 zusammen, so dass zur Ausbildung der jeweiligen Gegenelemente an der Schraube 2 der ohnehin vorhandene Gewindeabschnitt 7 herangezogen wird, also eine Spezialausbildung oder -ausrüstung der Schraube 2 nicht erforderlich ist. In dieser Stellung ist die Schraube 2 nun erstmals relativ zu der Hülse 3 definiert festgesetzt und kann nur durch Überwindung einer entsprechenden Gegenkraft bewegt werden. Diese Position der Schraube 2 ist besonders vorteilhaft, da das Bauteil 20 gut transportiert und insbesondere relativ zu einem weiteren Bauteil positioniert werden kann, ohne dass der Transport und die Positionierung durch nach unten herausstehende freie Enden der Schraube 2 behindert wird.

Die federnden Elemente 15 sind mit ihren freien Enden 16 der zweiten Engstelle 11 vorzugsweise so ausgebildet, angeordnet und bemessen, dass die freien Enden 16 steigungsbehaftet enden, so dass sie mehr oder weniger gleichzeitig über den Umfang gesehen in die Vertiefung des Gewindes 8 des Gewindeabschnitts 7 eintreten können. Diese Ausbildung und Anpassung kann sogar dazu genutzt werden, um anschließend an eine Axialbewegung der Schraube 2 gegenüber der Hülse 3 bei der Montage des Verbindungselements 1 noch eine geringfügige Relativverdrehung zwischen Schraube 2 und Hülse 3 herbeizuführen, um die begrenzte axiale Beweglichkeit gänzlich zu beseitigen und die Schraube 2 und die Hülse 3 gleichsam fest bzw. zu einem festen Verbindungselement 1 zusammenzufügen.

Die weitere Endmontage an einem zweiten Bauteil 23 ist anhand von **Fig. 9** erkennbar. Zwischen den Bauteilen 20, 23 ist hier eine Dichtung 24 angeordnet. Der Übergang aus Fig. 8 kann so ablaufen, dass zunächst die Schraube 2 jedes Verbindungselements 1 durch einen rein axial verlaufenden Einschubvorgang weiter niedergedrückt wird, wobei der Zentrieransatz 9 in das Gewindeloch 25 eintritt, ohne dass sich die Gewindegänge des Gewindeabschnitts 7 mit den Gewindegängen in den Gewindelöchern 25 kontaktieren. Dies ist deshalb möglich, weil die abgerundeten freien Enden 16 der federnden Elemente 15 eine solche Axialverschiebung zulassen. Es versteht sich, dass bei Ausbildung der freien Enden 16 als scharfkantige Widerhaken, wie in Fig. 1 dargestellt, eine solche rein axiale Bewegung nicht möglich ist, sondern das axiale Niedertreten der Schraube 2 nur durch einen Schraubvorgang, also gleichsam ein Herausschrauben der Schraube 2 aus der Hülse 3 nach unten unter Eintritt in den Gewindegang des Gewindelochs 25 erzielt werden kann.

**Fig. 10** zeigt die zweite beispielhafte Ausführungsform des Verbindungselements 1 während der Endmontage. Zwischen den Bauteilen 20, 23 ist hier eine Unterlegscheibe 32 angeordnet.

Es ist in den Figuren auch erkennbar, dass die nach innen vorspringende Wulst 18 auf der Außenseite der Hülse 3 eine umlaufende Nut bildet, die nicht nur zur Erkennung der Orientierung bei der Herstellung des Verbindungselements 1 genutzt werden kann, sondern die als Durchgangsloch ausgebildete Bohrung 22 in axialer Zuordnung zu der umlaufenden Nut der Wulst 18 einen umlaufenden Vorsprung 27 (nicht dargestellt) aufweisen kann, so dass damit die axiale Lage der Hülse 3 und des Verbindungselements 1 im Bauteil 20 bestimmt wird. In Verbindung mit der Darstellung und Anordnung der beiden Engstellen 10 und 11 zueinander ist erkennbar, dass die Ausbildung und Abstimmung aufeinander so getroffen werden kann, dass die Reihenfolge des Freikommens des Gewindeabschnitts 7 von der zweiten Engstelle 11 während der Endmontage festgelegt werden kann. So kann die Ausbildung und Abstimmung z. B. so getroffen sein, dass der Gewindeabschnitt 7 von der zweiten Engstelle 11 freikommt, bevor der erste Gewindegang des Gewindes 8 Kontakt zu dem Gewinde im Gewindeloch 25 des anderen Bauteils 23 bekommen hat. Wenn die federnden Elemente 15 mit abgerundeten freien Enden 16 ausgestattet sind, kann auch eine Überschneidung des Austretens des Gewindeabschnitts 7 aus der zweiten Engstelle und ein Eintreten in den Gewindegang des Gewindelochs 25 in Überlappung realisiert werden. Es kann durchaus sinnvoll sein, diese Überlappung durchzuführen.

**Fig. 11** **und** **12** zeigen weitere beispielhafte Ausführungsformen des Verbindungselements 1 mit einer Schraube 2 gemäß Fig. 1, wobei lediglich die Hülse 3 abgewandelt ausgeführt ist.

Elemente der beiden Engstellen 10 und 11 sind hier zusammengefasst. Die Einprägungen 12 sind hier gleichzeitig auch als federnde Elemente 15 ausgebildet, wobei sie einerseits in einem nicht federnden Bereich die Flächenelemente 13 bilden und andererseits im freien Endbereich die freien Enden 16 der federnden Elemente 15 darstellen. Es versteht sich, dass die Abstimmung aufeinander entsprechend sorgfältig dimensioniert und ausgebildet ist. Die freien Enden 16 sind nicht steigungsbehaftet angeordnet, also in axialer Richtung auf einer gemeinsamen Umfangslinie bzw. -ebene liegen. Die freien Enden 16 der federnden Elemente 15 können in der dargestellten Weise mit unterschiedlich wirkenden Schrägflächen versehen sein, so dass ein Überschnappen über die Spitzen der Gewindegänge des Gewindes 8 nur in der einen Richtung möglich ist.

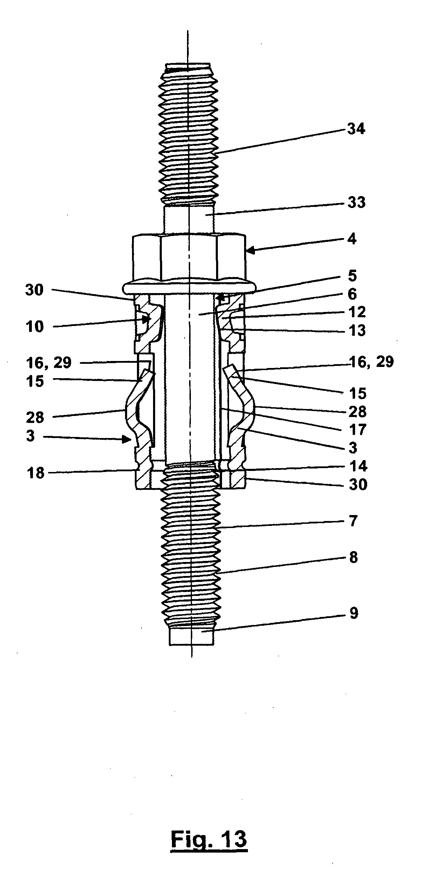

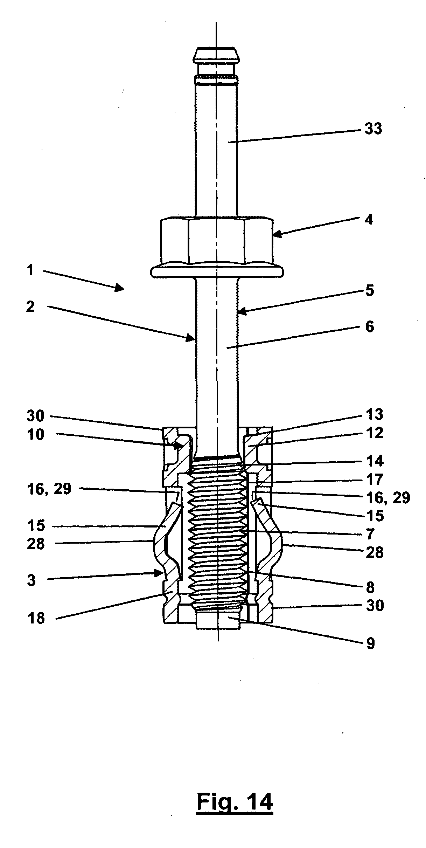

**Fig. 13** **und** **14** zeigen weitere beispielhafte Ausführungsformen des Verbindungselements 1 mit einer Schraube 2, die abgewandelt ausgeführt ist. Die Schraube 2 weist oberhalb des Kopfs 4 einen weiteren Schaftabschnitt 33 sowie in Fig. 13 einen weiteren Gewindeabschnitt 34 auf. Bei solchen Mittelbundschrauben und allen anderen Ausführungsformen des Verbindungselements 1 könnte anstelle des Kopfs 4 der Schraube 2 auch ein anderer Abschnitt vorgesehen sein, der eine Schlüsselangriffsfläche zur Betätigung der Schraube 2 bildet. In diesem Sinne ist der Begriff "Kopf" der Schraube in dieser Anmeldung also funktional zu verstehen und entsprechend weit auszulegen. Die Schnittdarstellungen der Fig. 13 und 14 sind weiterhin so gewählt, dass der Schlitz 17 erkennbar ist.

### BEZUGSZEICHENLISTE

- 1: Verbindungselement
- 2: Schraube
- 3: Hülse
- 4: Kopf
- 5: Schaft
- 6: Schaftabschnitt
- 7: Gewindeabschnitt
- 8: Gewinde
- 9: Zentrieransatz
- 10: erste Engstelle
- 11: zweite Engstelle
- 12: Einprägung
- 13: Flächenelement
- 14: Gewindeauslauf
- 15: federndes Element
- 16: freies Ende
- 17: Schlitz
- 18: Wulst
- 19: Spalt
- 20: Bauteil
- 21: vormontierte Baueinheit
- 22: Bohrung
- 23: Bauteil
- 24: Dichtung
- 25: Gewindeloch
- 26: Fase
- 27: Vorsprung
- 28: Betätigungsbereich
- 29: Eingriffsbereich
- 30: äußere Umfangsfläche
- 31: Freiraum
- 32: Unterlegscheibe
- 33: Schaftabschnitt
- 34: Gewindeabschnitt

## Patentansprüche

1. Verbindungselement (1), mit
einer Schraube (2),
wobei die Schraube (2) einen Kopf (4), einen Schaftabschnitt (6) und einen Gewindeabschnitt (7) mit einem Gewinde (8) aufweist,
wobei der Schaftabschnitt (6) dem Kopf (4) zugekehrt und der Gewindeabschnitt (7) von dem Kopf (4) abgekehrt angeordnet ist,
wobei der Schaftabschnitt (6) einen Durchmesser besitzt, der kleiner als der Außendurchmesser des Gewindes (8) des Gewindeabschnitts (7) ist; und
einer Hülse (3),
wobei die Hülse (3) eine erste Engstelle (10) mit einem Durchmesser besitzt, der kleiner als der Außendurchmesser des Gewindes (8) des Gewindeabschnitts (7) ist, **dadurch gekennzeichnet, dass**
die Hülse (3) ein federndes Element (15) mit einem Betätigungsbereich (28) und einem Eingriffsbereich (29) aufweist,
wobei in einer unmontierten Stellung des Verbindungselements (1) der Betätigungsbereich (28) derart aus der äußeren Umfangsfläche der Hülse (3) heraussteht, dass der Eingriffsbereich (29) nicht in das Gewinde (8) des Gewindeabschnitts (7) eingreift, und
wobei in einer vormontierten Stellung des Verbindungselements (1) in einer Bohrung (22) eines Bauteils (20) der Betätigungsbereich (28) derart nach innen gedrückt ist, dass der Eingriffsbereich (29) in das Gewinde (8) des Gewindeabschnitts (7) eingreift.

2. Verbindungselement (1) nach Anspruch 1, **dadurch gekennzeichnet, dass** das federnde Element (15) in der vormontierten Stellung eine zweite Engstelle (11) bildet, wobei das federnde Element (15) kraft- und/oder formschlüssig in das Gewinde (8) des Gewindeabschnitts (7) eingreift.

3. Verbindungselement (1) nach Anspruch 1 oder 2, **dadurch gekennzeichnet, dass** die Hülse (3) axial durchgehend einen Schlitz (17) oder Spalt (19) aufweist.

4. Verbindungselement (1) nach mindestens einem der Ansprüche 1 bis 3, **dadurch gekennzeichnet, dass** die Hülse (3) eine Mehrzahl federnder Elemente (15), insbesondere zwei federnde Elemente (15), aufweist.

5. Verbindungselement (1) nach Anspruch 4, **dadurch gekennzeichnet, dass** die federnden Elemente (15) freie Enden (16) aufweisen und zumindest die freien Enden (16) der federnden Elemente (15) axial entsprechend der Steigung des Gewindes (8) des Gewindeabschnitts (7) verteilt angeordnet sind.

6. Verbindungselement (1) nach mindestens einem der Ansprüche 1 bis 5, **dadurch gekennzeichnet, dass** das federnde Element (15) an einer Seite mit der Hülse (3) verbunden und an seinen drei anderen Seiten unter Bildung eines Freiraums (31) frei von der Hülse (3) ist.

7. Verbindungselement (1) nach mindestens einem der Ansprüche 1 bis 6, **dadurch gekennzeichnet, dass** das federnde Element (15) im Vergleich zu der Hülse (3) eine geringere Materialstärke besitzt.

8. Verbindungselement (1) nach mindestens einem der Ansprüche 1 bis 7, **dadurch gekennzeichnet, dass** der Betätigungsbereich (28) des federnden Elements (15)
in der unmontierten Stellung des Verbindungselements (1) radial aus der äußeren Umfangsfläche der Hülse (3) heraussteht, und
in der vormontierten Stellung des Verbindungselements (1) in der Bohrung (22) des Bauteils (20) radial nach innen gedrückt ist.

9. Verbindungselement (1) nach mindestens einem der Ansprüche 1 bis 8, **dadurch gekennzeichnet, dass** der Betätigungsbereich (28) des federnden Elements (15) in der vormontierten Stellung des Verbindungselements (1) in der Bohrung (22) des Bauteils (20) mit der inneren Oberfläche der Bohrung (22) bzw. dem Material des Bauteils (20) oder einem anderen Teil derart in Kontakt kommt, dass der Betätigungsbereich (28) und dementsprechend auch der damit verbundene Eingriffsbereich (29) radial nach innen gedrückt wird.

10. Vormontierte Baueinheit (21), mit
einem Bauteil (20) mit einer Bohrung (22); und
einem Verbindungselement (1), insbesondere einem Verbindungselement (1) nach mindestens einem der Ansprüche 2 bis 9, mit
einer Schraube (2),
wobei die Schraube (2) einen Kopf (4), einen Schaftabschnitt (6) und einen Gewindeabschnitt (7) mit einem Gewinde (8) aufweist,
wobei der Schaftabschnitt (6) dem Kopf (4) zugekehrt und der Gewindeabschnitt (7) von dem Kopf (4) abgekehrt angeordnet ist,
wobei der Schaftabschnitt (6) einen Durchmesser besitzt, der kleiner als der Außendurchmesser des Gewindes (8) des Gewindeabschnitts (7) ist, und einer Hülse (3),
wobei die Hülse (3) eine erste Engstelle (10) mit einem Durchmesser besitzt, der kleiner als der Außendurchmesser des Gewindes (8) des Gewindeabschnitts (7) ist, **dadurch gekennzeichnet, dass**
die Hülse (3) ein federndes Element (15) mit einem Betätigungsbereich (28) und einem Eingriffsbereich (29) aufweist,
wobei in einer unmontierten Stellung des Verbindungselements (1) der Betätigungsbereich (28) derart aus der äußeren Umfangsfläche der Hülse (3) heraussteht, dass der Eingriffsbereich (29) nicht in das Gewinde (8) des Gewindeabschnitts (7) eingreift, und
wobei in einer vormontierten Stellung des Verbindungselements (1) in der Bohrung (22) des Bauteils (20) der Betätigungsbereich (28) derart nach innen gedrückt ist, dass der Eingriffsbereich (29) in das Gewinde (8) des Gewindeabschnitts (7) eingreift.

11. Verfahren zur Herstellung eines Verbindungselements (1) mit einer Schraube (2) und einer daran unverlierbar angeordneten Hülse (3), insbesondere nach mindestens einem der Ansprüche 2 bis 9, mit den Schritten:
Bildung mindestens einer Einprägung (12) an einem ebenen Materialstreifen zur späteren Ausbildung einer ersten Engstelle (10);
Bildung mindestens eines federnden Elements (15) zur späteren Ausbildung einer zweiten Engstelle (11);
Rollen des ebenen Materialstreifens zu einer Rohhülse;
Einschieben der Schraube (2) axial in den Innenraum der Rohhülse;
Verformung der Rohhülse durch einen radial nach innen wirkenden Quetschvorgang zu der Hülse (3) derart, dass
die erste Engstelle (10) einen Durchmesser besitzt, der kleiner als der Außendurchmesser des Gewindes (8) des Gewindeabschnitts (7) ist, so dass die Schraube (2) und die Hülse (3) unverlierbar miteinander verbunden sind, und
in einer unmontierten Stellung des Verbindungselements (1) ein Betätigungsbereich (28) des federnden Elements (15) derart aus der äußeren Umfangsfläche der Hülse (3) heraussteht, dass ein Eingriffsbereich (29) des federnden Elements (15) nicht in das Gewinde (8) des Gewindeabschnitts (7) eingreift, und
in einer vormontierten Stellung des Verbindungselements (1) in einer Bohrung (22) eines Bauteils (20) der Betätigungsbereich (28) derart nach innen gedrückt ist, dass der Eingriffsbereich (29) in das Gewinde (8) des Gewindeabschnitts (7) eingreift und somit die zweite Engstelle (11) bildet.

12. Verfahren nach Anspruch 11, **dadurch gekennzeichnet, dass**
der Materialstreifen unter Bildung eines Spalts mit einem ersten Durchmesser zu der Rohhülse gerollt wird, und
die Rohhülse durch den Quetschvorgang zu der Hülse (3) mit einem Schlitz (17) oder einem Spalt (19) mit einem zweiten Durchmesser verformt wird, der kleiner als der erste Durchmesser ist.

## Claims

1. A fastener (1), comprising
a screw (2),
the screw (2) including a head (4), a shank portion (6) and a threaded portion (7) including a thread (8),
the shank portion (6) being arranged to face the head (4) and the threaded portion (7) being arranged to face away from the head (4),
the shank portion (6) having a diameter being smaller than the outer diameter of the thread (8) of the threaded portion (7); and
a bush (3),
the bush (3) including a first narrowing location (10) having a diameter being smaller than the outer diameter of the thread (8) of the threaded portion (7), **characterised in that**
the bush (3) includes at least one resilient element (15) having an actuation portion (28) and an engagement portion (29),
the actuation portion (28) in an unmounted position of the fastener (1) extending from the outer circumference of the bush (3) in a radial direction in a way that the engagement portion (29) does not engage the thread (8) of the threaded portion (7), and
the actuation portion (28) is pressed in an inward direction in a pre-mounted position of the fastener (1) in a bore (22) of a component (20) such that the engagement portion (29) engages the thread (8) of the threaded portion (7).

2. The fastener (1) of claim 1, **characterised in that** the resilient element (15) forms a second narrowing location (11) in the pre-mounted position, the resilient element (15) engaging the thread (8) of the threaded portion (7) by a frictional connection and/or a positive fit.

3. The fastener (1) of claim 1 or 2, **characterised in that** the bush (3) includes a slot (17) or a gap (19) continuously extending in an axial direction.

4. The fastener (1) of at least one of claims 1 to 3, **characterised in that** the bush (3) includes a plurality of resilient elements (15), especially two resilient elements (15).

5. The fastener (1) of claim 4, **characterised in that** the resilient elements (15) have free ends (16) and at least the free ends (16) of the resilient elements (15) are located in an axially distributed manner corresponding to the pitch of the thread (8) of the threaded portion (7).

6. The fastener (1) of at least one of claims 1 to 5, **characterised in that** the resilient element (15) is connected to the bush (3) at a first side and is not connected to the bush (3) at its three other sides such that a free space (31) is formed.

7. The fastener (1) of at least one of claims 1 to 6, **characterised in that** the resilient element (15) has a thickness which is smaller than a thickness of the bush (3).

8. The fastener (1) of at least one of claims 1 to 7, **characterised in that** the actuation portion (28) of the resilient element (15)
in the unmounted position of the fastener (1) protrudes from the outer circumference of the bush (3) in a radial outward direction, and
in the pre-mounted position of the fastener (1) in the bore (22) of the component (20) is pressed in a radial inward direction.

9. The fastener (1) of at least one of claims 1 to 8, **characterised in that** the actuation portion (28) of the resilient element (15) in the pre-mounted position of the fastener (1) in the bore (22) of the component (20) gets in contact with the inner surface of the bore (22) and with the material of the component (20) or a different element, respectively, such that the actuation portion (28) and the engagement portion (29) connected thereto are pressed in a radial inward direction.

10. A pre-mounted unit (21), comprising:
a component (20) including a bore (22); and
a fastener (1), especially a fastener (1) of at least one of claims 2 to 9, including:
a screw (2),
the screw (2) including a head (4), a shank portion (6) and a threaded portion (7) including a thread (8),
the shank portion (6) being arranged to face the head (4) and the threaded portion (7) being arranged to face away from the head (4),
the shank portion (6) having a diameter being smaller than the outer diameter of the thread (8) of the threaded portion (7); and
a bush (3),
the bush (3) including a first narrowing location (10) having a diameter being smaller than the outer diameter of the thread (8) of the threaded portion (7), **characterised in that**
the bush (3) includes at least one resilient element (15) having an actuation portion (28) and an engagement portion (29),
the actuation portion (28) in an unmounted position of the fastener (1) extending from the outer circumference of the bush (3) in a radial direction in a way that the engagement portion (29) does not engage the thread (8) of the threaded portion (7), and
the actuation portion (28) is pressed in an inward direction in a pre-mounted position of the fastener (1) in a bore (22) of a component (20) such that the engagement portion (29) engages the thread (8) of the threaded portion (7).

11. A method of producing a fastener (1) including a screw (2) and a bush (3) being captively connected to the screw (2), especially of at least one of claims 2 to 9, comprising the steps of:
forming at least one impression (12) on a plain strip of sheet material to later form a first narrowing location (10);
forming at least one resilient element (15) to later form a second narrowing location (11);
rolling the plain strip of sheet material to form a raw bush;
introducing the screw (2) into the interior of the raw bush in an axial direction;
deforming the raw bush by a radial inwardly directed squeezing process to attain the bush (3) in a way that
the first narrowing location (10) has a smaller diameter than the outer diameter of the thread (8) of the threaded portion (7) such that the screw (2) and the bush (3) are captively interconnected, and
an actuation portion (28) of the resilient element (15) in an unmounted position of the fastener (1) extends from the outer circumference of the bush (3) in a radial direction in a way that an engagement portion (29) of the resilient element (15) does not engage the thread (8) of the threaded portion (7), and
the actuation portion (28) is pressed in an inward direction in a pre-mounted position of the fastener (1) in a bore (22) of a component (20) such that the engagement portion (29) engages the thread (8) of the threaded portion (7) and thus forms the second narrowing location (11).

12. The method of claim 11, **characterised in that**
the sheet material is rolled to attain the raw bush in a way that a gap having a first diameter is formed, and
the raw bush by the squeezing process is deformed to attain the bush (3) having a slot (17) or a gap (19) having a second diameter being smaller than the first diameter.

## Revendications

1. Élément de liaison (1), comportant
une vis (2),
ladite vis (2) comportant une tête (4), une partie formant tige (6) et une partie filetée (7) avec un filetage (8),
ladite partie formant tige (6) étant orientée vers la tête (4) et ladite partie filetée (7) étant détournée de la tête (4),
la partie formant tige (6) ayant un diamètre inférieur au diamètre extérieur du filetage (8) de la partie filetée (7); et
un manchon (3)
ledit manchon (3) comportant une première zone d'étranglement (10) avec un diamètre inférieur au diamètre extérieur du filetage (8) de la partie filetée (7), **caractérisé en ce que**
le manchon (3) comporte un élément à ressort (15) avec une zone de manoeuvre (28) et une zone de prise (29),
la zone de manoeuvre (28), dans une position non montée de l'élément de liaison (1), s'avançant hors du pourtour extérieur du manchon (3), de telle sorte que la zone de prise (29) n'entre pas en prise avec le filetage (8) de la partie filetée (7), et
la zone de manoeuvre (28), dans une position pré-montée de l'élément de liaison (1) dans un perçage (22) d'une pièce (20), étant sollicitée vers l'intérieur de telle sorte que la zone de prise (29) entre en prise avec le filetage (8) de la partie filetée (7).

2. Élément de liaison (1) selon la revendication 1, **caractérisé en ce que** l'élément à ressort (15), dans la position pré-montée, forme une deuxième zone d'étranglement (11), l'élément à ressort (15) entrant en prise par force et/ou par conjugaison de forme dans le filetage (8) de la partie filetée (7).

3. Élément de liaison (1) selon la revendication 1 ou 2, **caractérisé en ce que** le manchon (3) comporte, de part en part dans le sens axial, une fente (17) ou fissure (19).

4. Élément de liaison (1) selon au moins l'une quelconque des revendications 1 à 3, **caractérisé en ce que** le manchon (3) comporte une pluralité d'éléments à ressort (15), en particulier deux éléments à ressort (15).

5. Élément de liaison (1) selon la revendication 4, **caractérisé en ce que** les éléments à ressort (15) comportent des extrémités libres (16) et au moins les extrémités libres (16) des éléments à ressort (15) sont disposées en étant étalées dans le sens axial conformément au pas du filetage (8) de la partie filetée (7).

6. Élément de liaison (1) selon au moins l'une quelconque des revendications 1 à 5, **caractérisé en ce que** l'élément à ressort (15) est réuni au manchon (3) sur un côté et est dégagé du manchon (3) sur ses trois autres côtés en formant un dégagement (31).

7. Élément de liaison (1) selon au moins l'une quelconque des revendications 1 à 6, **caractérisé en ce que** l'élément à ressort (15) a une épaisseur de matière plus faible que celle du manchon (3).

8. Élément de liaison (1) selon au moins l'une quelconque des revendications 1 à 7, **caractérisé en ce que** la zone de manoeuvre (28) de l'élément à ressort (15),
dans la position non montée de l'élément de liaison (1), s'avance radialement hors du pourtour extérieur du manchon (3), et,
dans la position pré-montée de l'élément de liaison (1) dans le perçage (22) de la pièce (20), est sollicitée radialement vers l'intérieur.

9. Élément de liaison (1) selon au moins l'une quelconque des revendications 1 à 8, **caractérisé en ce que**, dans la position pré-montée de l'élément de liaison (1) dans le perçage (22) de la pièce (20), la zone de manoeuvre (28) de l'élément à ressort (15) entre en contact avec la surface intérieure du perçage (22) ou avec la matière de la pièce (20) ou avec une autre partie, de telle sorte que la zone de manoeuvre (28) et, par conséquent aussi, la zone de prise (29) reliée à celle-ci, sont sollicitées radialement vers l'intérieur.

10. Module pré-monté (21), comportant
une pièce (20) avec un perçage (22), et
un élément de liaison (1), en particulier un élément de liaison (1) selon au moins l'une quelconque des revendications 2 à 9, comportant
une vis (2),
ladite vis (2) comportant une tête (4), une partie formant tige (6) et une partie filetée (7) avec un filetage (8),
ladite partie formant tige (6) étant orientée vers la tête (4) et ladite partie filetée (7) étant détournée de la tête (4),
la partie formant tige (6) ayant un diamètre inférieur au diamètre extérieur du filetage (8) de la partie filetée (7); et
un manchon (3);
ledit manchon (3) comportant une première zone d'étranglement (10) avec un diamètre inférieur au diamètre extérieur du filetage (8) de la partie filetée (7), **caractérisé en ce que**
le manchon (3) comporte un élément à ressort (15) avec une zone de manoeuvre (28) et une zone de prise (29),
la zone de manoeuvre (28), dans une position non montée de l'élément de liaison (1), s'avançant hors du pourtour extérieur du manchon (3), de telle sorte que la zone de prise (29) n'entre pas en prise avec le filetage (8) de la partie filetée (7), et
la zone de manoeuvre (28), dans une position pré-montée de l'élément de liaison (1) dans un perçage (22) d'une pièce (20), étant sollicitée vers l'intérieur de telle sorte que la zone de prise (29) entre en prise avec le filetage (8) de la partie filetée (7).

11. Procédé permettant la réalisation d'un élément de liaison (1) comportant une vis (2) et un manchon (3), agencé de manière imperdable sur celle-ci, en particulier selon au moins l'une quelconque des revendications 2 à 9, comportant les étapes:
formation d'au moins une empreinte (12) sur une bande de matière plane pour la réalisation ultérieure d'une première zone d'étranglement (10);
formation d'au moins un élément à ressort (15) pour la réalisation ultérieure d'une deuxième zone d'étranglement (11);
roulage de la bande de matière plane pour obtenir un manchon primaire;
engagement de la vis (2) dans le sens axial dans l'espace intérieur du manchon primaire;
déformation du manchon primaire par un processus d'écrasement agissant radialement vers l'intérieur pour obtenir le manchon (3), de telle sorte que
la première zone d'étranglement (10) a un diamètre inférieur au diamètre extérieur du filetage (8) de la partie filetée (7), de telle sorte que la vis (2) et le manchon (3) sont reliés entre eux de manière imperdable, et
dans une position non montée de l'élément de liaison (1), une zone de manoeuvre (28) de l'élément à ressort (15) s'avance hors du pourtour extérieur du manchon (3), de telle sorte que la zone de prise (29) de l'élément à ressort (15) n'entre pas en prise avec le filetage (8) de la partie filetée (7), et
dans une position pré-montée de l'élément de liaison (1) dans un perçage (22) d'une pièce (20), la zone de manoeuvre (28) est sollicitée vers l'intérieur de telle sorte que la zone de prise (29) entre en prise avec le filetage (8) de la partie filetée (7) et forme ainsi la deuxième zone d'étranglement (11).

12. Procédé selon la revendication 11, **caractérisé en ce que**
la bande de matière est roulée selon un premier diamètre moyennant la formation d'une fente, pour obtenir le manchon primaire, et
le manchon primaire est déformé par un processus d'écrasement pour obtenir le manchon (3) avec une fente (17) ou une fissure (19) et avec un deuxième diamètre, qui est inférieur au premier diamètre.
